Europäisches Patentamt

European Patent Office

Office européen des brevets

(19)

(11) Numéro de publication: **0 179 673**
**B1**

## FASCICULE DE BREVET EUROPEEN

(12)

(45) Date de publication du fascicule du brevet:
**14.09.88**

(51) Int. Cl.⁴: **F 16 K 31/60**

(21) Numéro de dépôt: **85401483.4**

(22) Date de dépôt: **18.07.85**

(54) **Organe de commande pour robinet.**

(30) Priorité: **15.10.84 FR 8415774**
**03.01.85 FR 8500042**

(43) Date de publication de la demande:
**30.04.86 Bulletin 86/18**

(45) Mention de la délivrance du brevet:
**14.09.88 Bulletin 88/37**

(84) Etats contractants désignés:
**BE CH DE GB IT LI LU**

(56) Documents cités:
**FR - A - 2 440 506**
**FR - A - 2 519 404**

(73) Titulaire: **Delepine, Jean Claude, 23, rue Clapeyron,**
**F-75008 Paris (FR)**

(72) Inventeur: **Delepine, Jean Claude, 23, rue Clapeyron,**
**F-75008 Paris (FR)**

(74) Mandataire: **Bonnetat, Christian et al, Cabinet PROPI**
**Conseils 23 rue de Léningrad, F-75008 Paris (FR)**

## Description

La présente invention concerne un organe de commande pour robinet, notamment pour un robinet d'installation sanitaire.

On sait que les organes de commande pour robinet sont généralement constitués de poignées, de boutons ou analogue, fixés sur la tige de robinet commandant l'obturateur de celui-ci. De tels organes de commande sont monopièces et ils ne peuvent être facilement adaptés à des cas particuliers d'utilisation, de décoration, etc . . . à moins d'être prévus spécialement.

Il est déja connu (p. ex. du FR-A-24 40 506) un organe de commande pour robinet, comportant une jupe cylindrique et une pièce rapportée pouvant être enfilée sur ladite jupe et être fixée sur celle-ci de façon amovible. La pièce rapportée se trouve à une seule hauteur déterminée par un épaulement. Ainsi, une fois monté, l'organe de commande décrit dans ce document antérieur est comparable aux organes de commande monopièces décrits ci-dessus, avec leurs inconvénients.

La présente invention a pour objet de remédier à ces inconvénients. Elle concerne un organe de commande pour robinet pouvant être facilement adapté à chaque cas particulier de préhension et/ou de décoration.

A cette fin, selon l'invention, l'organe de commande pour robinet est caractérisé en ce qu'il comporte une jupe cylindrique à section circulaire ou polygonale, susceptible d'être fixée sur la tige du robinet qu' elle enveloppe et au moins une pièce rapportée pouvant être enfilée sur ladite jupe et être fixée sur celle-ci à toute hauteur désirée.

Ainsi, en choisissant de façon adéquate la forme de chaque pièce rapportée, le nombre des pièces rapportées et la disposition de celles-ci sur ladite jupe, on peut s'adapter facilement à chaque utilisateur (par exemple un handicapé) et prévoir une pluralité d'effets décoratifs différents.

En effet, lesdites pièces rapportées outre leurs formes diverses, peuvent être soit jointives, soit espacées sur ladite jupe et les effets décoratifs, ainsi que les organes de préhension qu'ils forment peuvent être multiples.

Dans un mode de réalisation simple, chaque pièce rapportée peut être constituée par un anneau.

Pour augmenter encore l'effet esthétique, la jupe et les pièces rapportées peuvent être en matière d'aspects différents.

En outre, les matières de chacune des pièces peuvent être également différentes.

Les figures du dessin annexé feront bien comprendre comment l'invention peut être réalisée.

La figure 1 est une vue éclatée en élévation illustrant un organe de commande pour robinet selon l'invention, en coupe partielle.

La figure 2 est une vue en perspective d'un exemple de réalisation de l'organe de commande pour robinet selon l'invention.

Les vues des couples de figures 3, 3A; 4, 4A; 5, 5A; 6, 6A; 7, 7A; 8, 8A et 9, 9A sont respectivement une vue en élévation et une vue de dessus de variantes de réalisation de ladite pièce rapportée.

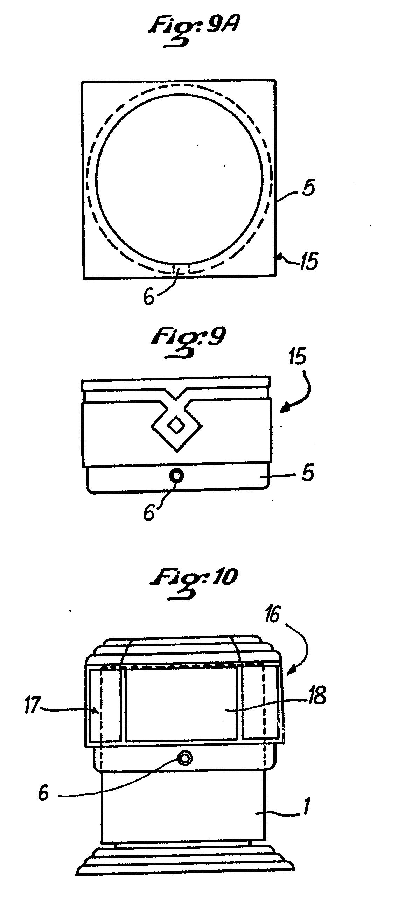

La figure 10 montre en élévation une variante de réalisation de l'organe de commande pour robinet selon l'invention.

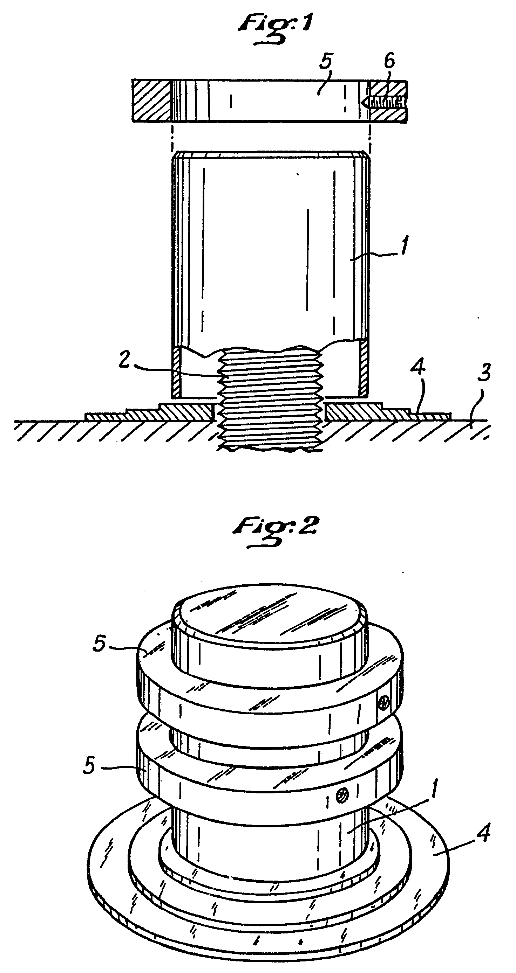

L'organe de commande pour robinet, conforme à l'invention et montré sur la figure 1, comporte une jupe 1 de forme sensiblement cylindrique, à section circulaire ou polygonale.

Comme le montre l'arrachement partiel de la figure 1, le corps du robinet comporte une partie filetée 2, traversant la paroi 3 sur laquelle est fixé le robinet. Sur la partie filetée 2 se visse une rondelle 4 plaquée contre la paroi 3. En position fermée du robinet, la partie inférieure de la jupe 1 se trouve au voisinage de la rondelle 4.

Par ailleurs, l'organe de commande selon l'invention comporte au moins une pièce rapportée 5, qui, sur la figure 1 présente la forme d'un tore à section carrée. L'évidement intérieur du tore 5 est prévu pour que celui-ci puisse coulisser sur la jupe 1. De plus, le tore 5 est pourvu d'une vis-pointeau 6 permettant de fixer le tore 5 en toute position désirée le long de la jupe 1.

De préférence, la matière et/ou l'aspect du tore 5 est différent de celui de la jupe 1. Par exemple, la jupe 1 est nickelée, alors que le tore 5 est doré.

On conçoit aisément que l'aspect et/ou les moyens de préhension de l'organe de commande pour robinet selon l'invention peuvent être variés de multiples façons. Pour cela, on peut:

–prévoir une pluralité de pièces rapportées 5 de formes et/ou d'aspects différents;

–monter sur la jupe 1 un nombre variable de pièces rapportées 5;

–monter sur la jupe 1 les pièces 5 de façon différente, par exemple jointives ou espacées.

Sur la figure 2, on a représenté un exemple particulièrement simple (et non pas limitatif) d'un mode de réalisation de l'organe de commande pour robinet selon l'invention.

Dans ce mode de réalisation particulier, les moyens de préhension de l'organe de commande pour robinet sont constitués de deux tores 5, espacés l'un de l'autre.

Des variantes de réalisation de la pièce rapportée 5 sont illustrées par les figures 3, 3A à 9, 9A.

Sur les figures 3 et 3A la pièce rapportée 5 porte des torsades 7 la recouvrant sur toutes ses surfaces externes. L'espacement des torsades 7 peut être varié à volonté.

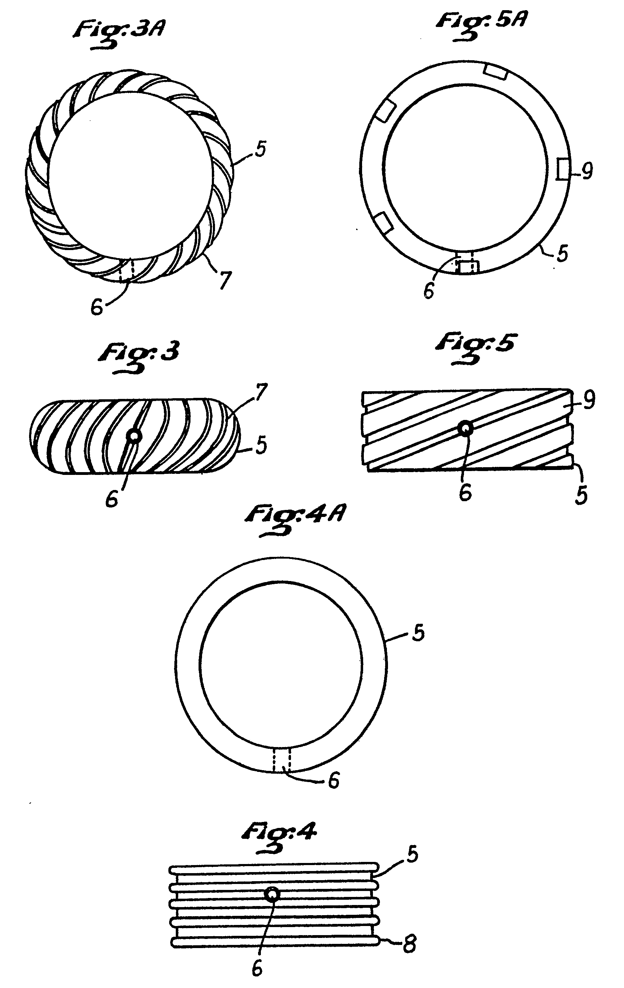

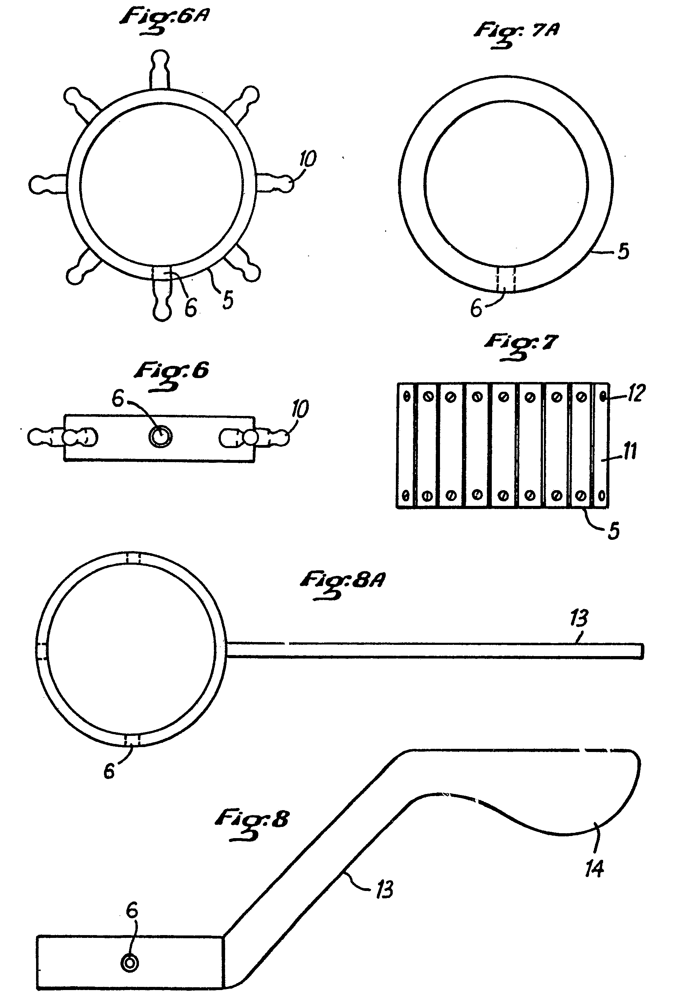

Sur les figures 4 et 4A la pièce rapportée 5 présente sur la face latérale externe des bandes annulaires 8 espacées. La largeur de ces bandes, ainsi que la nature de la matière employée sont variables. Les figures 5 et 5A présentent une pièce rapportée toroïdale 5 qui, sur au moins une partie de sa face externe, possède des bandes hélicoïdales 9, donnant à la surface de ladite pièce rapportée une allure générale spiralée.

Les figures 6 et 6A présentent des éléments espacés 10 faisant saillie à l'extérieur. Dans un mode de réalisation particulier, les éléments 10 sont constitués de petites manettes ou poignées, donnant à l'ensemble de la pièce rapportée 5 une allure de roue de gouvernail. Sur les figures 7 et 7A, les irrégularités de surface résultent de la fixation de plaquettes rectangulaires juxtaposées 11 parallèles à l'axe de la pièce 5. La fixation de chaque plaquette 11 peut être réalisée au moyen de vis 12, par exemple une à chaque extrémité. Sur les figures 8 et 8A, une augmentation de la faculté de préhension de la pièce rapportée 5 résulte de l'adjonction d'une poignée 13. Celle-ci peut être de formes et de tailles variées, l'extrémité de préhension 14 étant par exemple orthogonale à l'axe principal de la pièce rapportée 5.

Sur les figures 9 et 9A, la pièce rapportée 5 présente un contour extérieur à section carrée 15. Les faces externes peuvent être recouvertes de dessins en relief pour améliorer l'esthétique de la pièce et la faculté de préhension.

La figure 10 représente une forme particulière de réalisation de l'invention consistant en l'emploi d'une pièce rapportée 5 dont le contour extérieur présente une section octogonale 16. Dans un mode de réalisation particulier, la pièce rapportée 5 présente des faces de tailles différentes deux types de faces composant l'ensemble, à savoir des petites faces 17 et des grandes faces 18. Les deux types de faces 17, 18 sont munis à leurs extrémités d'éléments de décoration.

De manière générale, la présente invention a pour objet de créer des moyens de préhension augmentant considérablement la préhension des pièces rapportées 5. De plus, ces moyens résultant d'irrégularités de surfaces, donnent à la pièce un aspect ornemental. Comme mentionné ci-dessus, la matière employée pour la pièce rapportée 5 n'est pas limitée à la matière employée pour la jupe 1. On peut utiliser des matières différentes pour la pièce rapportée 5 augmentant ainsi l'aspect décoratif de l'ensemble.

## Revendication

Organe de commande pour robinet, comportant une jupe cylindrique (1) à section circulaire ou polygonale, susceptible d'être fixée sur la tige du robinet qu'elle enveloppe et une pièce rapportée (5) pouvant être enfilée sur ladite jupe et être fixée sur celle-ci de façon amovible,

caractérisé en ce que ladite pièce rapportée (5) peut coulisser librement le long de ladite jupe (1) et en ce que des moyens de fixation (6) sont prévus pour fixer ladite pièce rapportée (5) sur ladite jupe (1), à toute hauteur désirée de cette dernière.

## Patentanspruch

Stellteil für einen Absperrhahn mit einem zylindrischen Mantel (1) von rundem oder vieleckigem Querschnitt, der auf dem Schaft des von ihm umgebenen Absperrhahns befestigt werden kann, und mit einem zugeordneten Teil (5), das auf den Mantel (1) aufgesteckt und auf diesem in beweglicher Weise befestigt werden kann,

dadurch gekennzeichnet, dass das zugeordnete Teil (5) frei entlang der Länge des Mantels (1) verschiebbar ist, und dass Befestigungsmittel (6) zum Befestigen des zugeordneten Teils (5) in jeder gewünschten Höhe auf dem Mantel (1) vorgesehen sind.

## Claim

Member for controlling a tap or faucet, comprising a cylindrical skirt (1) of circular or polygonal section, adapted to be fixed on the tap rod which it surrounds, and an added piece (5) adapted to be fitted on said skirt and to be removably fixed thereon,

characterized in that said added piece (5) is freely slidable along said skirt (1), and in that fastening means (6) are provided in order to fix said added piece (5) on said skirt (1) at any desired height of the latter.

*Fig.1*

*Fig.2*

Fig: 3A

Fig: 5A

Fig: 3

Fig: 5

Fig: 4A

Fig: 4

Fig:6A

10

6 5

Fig:6

6

10

Fig:7A

5

6

Fig:7

12

11

5

Fig:8A

13

6

Fig:8

13

14

6

9

*Fig:9A*

5

15

6

*Fig:9*

15

5

6

*Fig:10*

16

17

18

6

1